# EUROPEAN PATENT SPECIFICATION

(11) **EP 4 332 027 B1**
(45) Date of publication and mention of the grant of the patent: **04.11.2026**
(21) Application number: 23206314.9
(22) Date of filing: 29.03.2019
(51) Int. Cl.: B65G 21/18

(54) **AN ACCUMULATING CONVEYOR**
STAUFÖRDERER
TRANSPORTEUR ACCUMULATEUR

(43) Date of publication of application: 06.03.2024
(62) Document number(s) of the earlier application(s) in accordance with Art. 76 EPC: 19166225.3 / 3 715 289
(73) Proprietor: Specialty Conveyor B.V., 1689 AN Zwaag (NL)
(72) Inventor: BALK, Wouter, 1396 JK Baambrugge (NL); SCHOUTEN, Emiel Martijn, 1055 JE Amsterdam (NL); KUIN, Dick, 1693 BC Wervershoof (NL)
(74) Representative: De Vries & Metman

(56) References cited:
- EP-A1- 1 902 978
- WO-A1-2015/142176
- WO-A1-99/11547

## Description

The present invention relates to a conveyor.

EP 1 902 978 relates to a conveyor for conveying piece goods or the like through a helical path around a central axis in a vertical direction, comprising a frame which supports an endless conveyor belt which is movable along the helical path in a conveying direction. The conveyor belt includes carrier plates which are movably connected to each other. The frame includes at least a guide and at least a number of carrier plates comprise at least a guide roller rotatable about an axis of rotation. The guide roller has at least a first guide roller surface which is in contact with the guide in a first contact location, and a second guide roller surface which is in contact with the guide in a second contact location. The first and second contact locations are spaced from each other and the normal to the first guide roller surface in the first contact location deviates from the normal to the second guide roller surface in the second contact location.

The conveyor according to the invention is defined in claim 1.

In an embodiment the line along which the resultant radial force of the conveyor line towards the centerline of the inner rail acts intersects a centerline of the conveyor line, such that the upper contact location between the guide roller and the inner rail where the guide roller is radially supported lies above the centerline of the conveyor line as seen in a cross-sectional plane of the helical track in which the centerline of the helical track lies.

In an embodiment the guide roller is cylindrical and the inner rail has a trough-shape including a bottom between a lower sidewall and an upper sidewall, which bottom supports the guide roller in radial direction from the centerline of the helical track.

In an embodiment the guide roller of each slat and the inner rail are arranged such that the upper contact location is a point contact at the bottom adjacent to the upper sidewall.

The invention will hereafter be elucidated with reference to very schematic drawings showing embodiments of the invention by way of example.
Fig. 1 is a perspective view of an embodiment of an accumulating conveyor according to the invention.
Fig. 2 is a cross-sectional view of the embodiment as shown in Fig. 1, as seen from above.
Fig. 3 is a similar view as Fig. 1, but showing a part of the embodiment on a larger scale.
Fig. 4 is a perspective view of a section of a part of the embodiment of Fig. 1.
Fig. 5 is a similar view as Fig. 4, but showing a section at a different location.
Fig. 6 is a plan view of a part of Fig. 4 on a larger scale.
Fig. 7 is an illustrative plan view of the lower bridge.
Fig. 8 is a side view of an embodiment of a conveyor belt including two slats.
Fig. 9 is a cross-sectional view of the conveyor belt as shown in Fig. 8.
Fig. 10 is a similar view as Fig. 9 in a condition in which the conveyor belt is supported by the helical track.
Fig. 11 is a similar view as Fig. 10, but showing a part of an alternative embodiment on a larger scale.
Fig. 12 is a cross-sectional view of the conveyor belt at one of the bridges.
Fig. 13 is a similar view as Fig. 12, but showing a different condition.
Fig. 14 is a similar view as Fig. 1, showing a part thereof on a larger scale.
Fig. 15 is a sectional view of the part as shown in Fig. 14.
Fig. 16 is a similar view as Fig. 1, showing a part thereof on a larger scale.
Fig. 17 is a sectional view of the part as shown in Fig. 16.
Fig. 18 is a similar view as Fig. 1 of an alternative embodiment.
Fig. 19 is a similar view as Fig. 18, showing another variant.
Fig. 20 is a perspective view of an embodiment of the accumulating conveyor including a helical support plate.
Fig. 21 is a cross-sectional view of the embodiment as shown in Fig. 20.
Fig. 22 is an illustrative view of an alternative embodiment of the accumulating conveyor according to the invention.

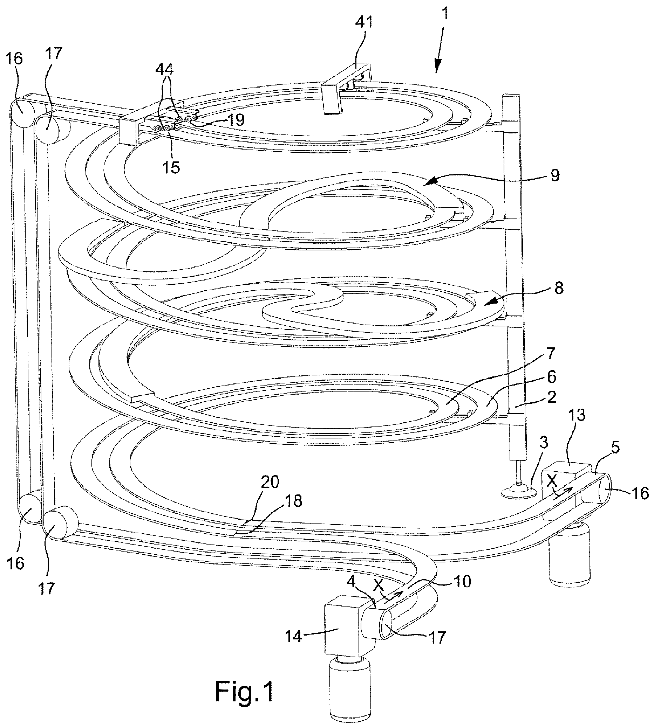

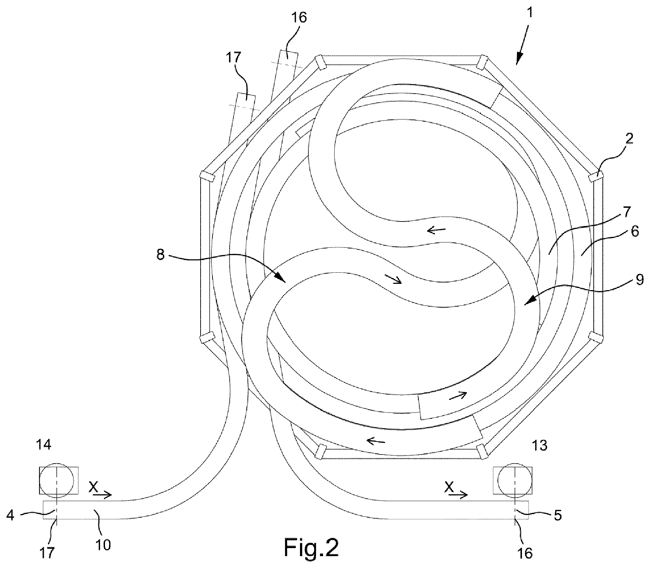

Figs. 1 and 2 show an embodiment of an accumulating conveyor 1 according to the invention. The accumulating conveyor 1 has a frame 2 including feet 3 which rest on a floor. The accumulating conveyor 1 has a product inlet 4 where products are received from a supply (not shown), for example a supplying machine, and a product outlet 5 where products are discharged, for example to a receiving machine (not shown). The accumulating conveyor 1 is suitable for temporarily storing products between the product inlet 4 and the product outlet 5. For example, in the event that the supply keeps on supplying products to the product inlet 4 whereas a receiving machine downstream of the product outlet 5 is temporarily out of order the products can be stored. This may prevent a production line from entirely stopping.

The frame 2 supports a first helical track in the form of an outer helical track 6 and a second helical track in the form of an inner helical track 7. The outer helical track 6 surrounds the inner helical track 7. The inner and outer helical tracks 6, 7 are arranged concentrically with respect to each other. In other words, their centrelines coincide. The accumulating conveyor 1 is further provided with a first S-shaped bridge in the form of a lower S-shaped bridge 8 and a second S-shaped bridge in the form of an upper S-shaped bridge 9 located above the lower bridge 8. The upper and lower bridges 8, 9 are coupled to each other and synchronously movable along the inner and outer helical tracks 6, 7.

The accumulating conveyor 1 has a single endless conveyor belt 10, in this case a slat belt which comprises slats 11 that are mounted to a chain 12 which is flexible in horizontal and vertical direction, for example a side-bow chain. The chain 12 is driven by two electric motors 13, 14, one of them located at the product inlet 4 and the other one located at the product outlet 5. Other locations are, however, conceivable. The conveyor belt 10 is guided by the inner and outer helical tracks 6, 7, the upper and lower bridges 8, 9, a first set of auxiliary guides in the form of a first series of wheels or sprockets 16 and non-helical tracks and a second set of auxiliary guides in the form of a second series of wheels or sprockets 17 and non-helical tracks.

Under operating conditions the conveyor belt 10 moves in a direction of conveyance X from the product inlet 4 via a horizontal track to a lower end 18 of the outer helical track 6 and then in upward direction along the outer helical track 6 until it reaches the lower bridge 8. Subsequently, the conveyor belt 10 moves via the lower bridge 8 to the inner helical track 7 to a location below an upper end 19 thereof and then in downward direction along the inner helical track 7. At a lower end 20 of the inner helical track 7 the conveyor belt 10 leaves the inner helical track 7 and moves via a horizontal track to a sprocket 16 at the product outlet 5 of the accumulating conveyor 1. The path of the conveyor belt 10 between the product inlet 4 and the product outlet 5 forms an accumulation region which supports and conveys products. The length of the accumulation region can be varied by displacing the upper and lower bridges 8, 9 along the inner and outer helical tracks 6, 7.

Outside the accumulation region the conveyor belt 10 has an unoccupied region between the product outlet 5 and the product inlet 4. The unoccupied region does not support and convey products, but returns the conveyor belt 10 from the product outlet 5 back to the product inlet 4 via the upper bridge 9. Its length varies inversely with the length of the accumulation region. From the sprocket 16 at the product outlet 5 the conveyor belt 10 moves upside down along a horizontal track to the sprocket 16 at a lower side of the inner and outer helical tracks 6, 7 which sprocket 16 directs the conveyor belt 10 upwardly at the outer side of the outer helical track 6 whereas the sprocket 16 at the upper end 19 of the inner helical track 7 directs the conveyor belt 10 to the inner helical track 7. Then, the conveyor belt 10 moves downwardly along the inner helical track 7 until the upper bridge 9 is reached. The upper bridge 9 guides the conveyor belt 10 to the outer helical track 6 which guides the conveyor belt 10 in upward direction to the sprocket 17 at the upper end 15 of the outer helical track 6 which sprocket 17 directs the conveyor belt 10 downwardly at the outer side of the outer helical track 6. The sprocket 17 at a lower side of the outer helical track 6 diverts the conveyor belt 10 to a horizontal track towards the sprocket 17 at the product inlet 4.

The lower and upper bridges 8, 9 are indirectly displaced along the inner and outer helical tracks 6, 7 by both motors 13, 14. If the motors 13, 14 are operated at the same speed the lower and upper bridges 8, 9 stand still with respect to the inner and outer helical tracks 6, 7. The accumulation region of the conveyor belt 10 remains the same. If only the motor 14 at the product inlet 4 is operated, the conveyor belt 10 does not move at the product outlet 5 and the motor 14 at the product inlet 4 will pull the lower and upper bridges 8, 9 upwardly by means of the conveyor belt 10. As a result, the accumulation region will increase. If only the motor 13 at the product outlet 5 is operated, the conveyor belt 10 does not move at the product inlet 4 and the motor 13 at the product outlet 5 will pull the lower and upper bridges 8, 9 downwardly by means of the conveyor belt 10. As a result, the accumulation region will decrease.

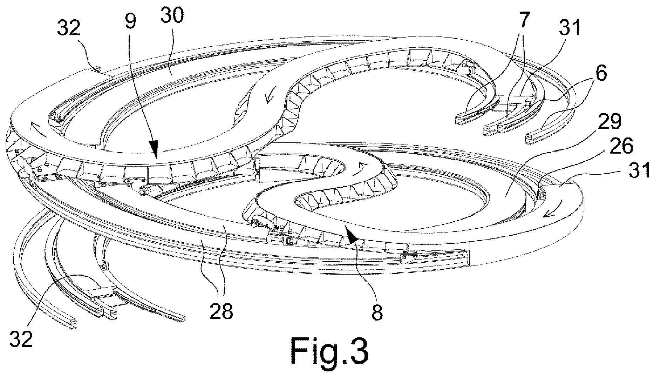

A transfer region between the lower bridge 8 and the inner helical track 7 at a bridge exit 32 is similar as the transfer region between the outer helical track 6 and the lower bridge 8 at a bridge entrance 31, but in reverse order, see Fig. 3. Similarly, transfer regions between the upper bridge 9 and the respective inner and outer helical tracks 6, 7 are similar.

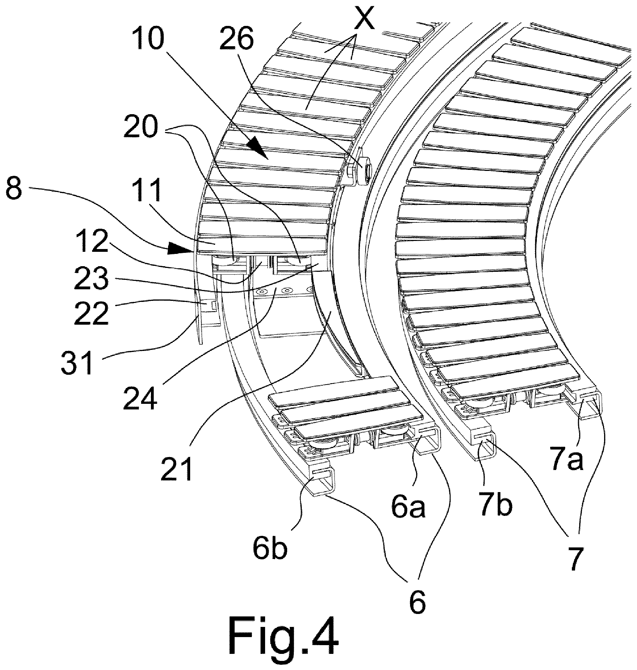

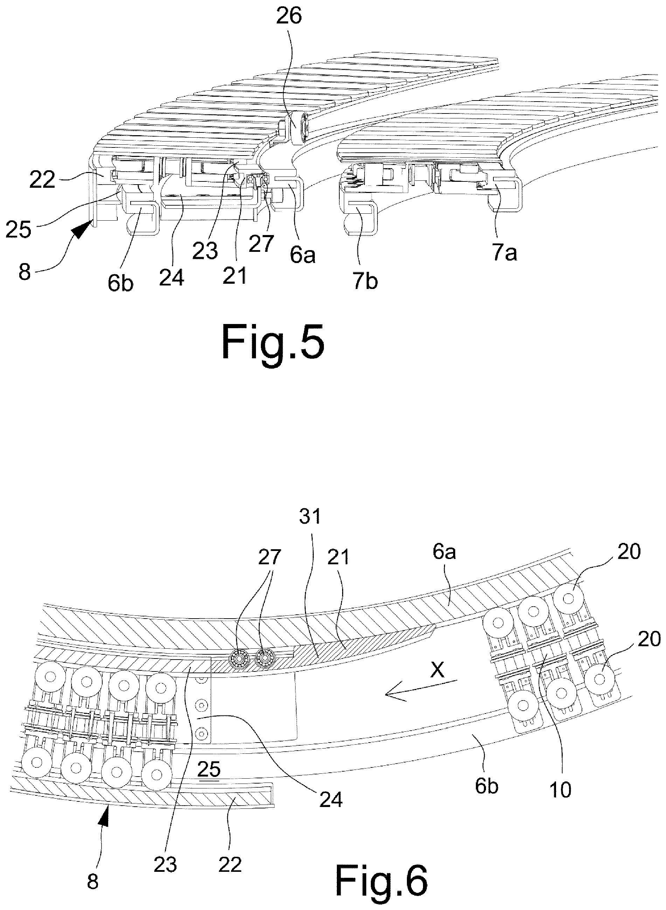

Figs. 3-6 show the accumulating conveyor 1 at the upper and lower bridges 8, 9 in more detail. Figs. 4 and 5 show that the inner and outer helical tracks 6, 7 are similar. Each of them has an inner rail 6a, 7a and an outer rail 6b, 7b. Fig. 4 shows a number of the slats 11 of the conveyor belt 10 at the outer helical track 6. For explanatory reasons a part of the slats 11 are not shown. For the same reason the upper sides of the slats 11 are not shown in Fig. 6. Each slat 11 is provided with two guide rollers 20 at a distance from each other in transverse direction of the conveyor belt 10 and at either side of the chain 12. The guide rollers 20 have axes of rotation including a vertical component and in this case the guide rollers 20 are cylindrical. At the inner and outer helical tracks 6, 7 one of the guide rollers 20 of each slat 11 is supported in radial direction with respect to the centrelines of the inner and outer helical tracks 6, 7, in upward direction and in downward direction by the inner rails 6a, 7a. For this reason the inner rails 6a, 7a have a trough shape. The outer rails 6b, 7b support the slats 11 in upward direction only through sliding bottom surfaces of the slats 11 which slide on upper surfaces of the outer rails 6b, 7b under operating conditions. The sliding bottom surfaces are lower sides of respective feet of the slats 11 on which the guide rollers are rotatably mounted. Because of the height difference between the guide rollers 20 and the sliding bottom surfaces of the slats 11 the outer rail 6b, 7b is located lower than the inner rail 6a, 7a of each of the inner and outer helical tracks 6, 7 as seen in cross-section, see Fig. 5. It is noted that the active one of the two guide rollers 20 of each slat 11 depends on the actual location of the slat 11 within the accumulating conveyor 1. The guide roller 20 that runs along the inner rail 6a of the outer helical track 6 will be at a distance from the inner rail 7a of the inner helical track 7.

Figs. 4-6 show a transfer region between the outer helical track 6 and the lower bridge 8 at the bridge entrance 31 in more detail. The lower bridge 8 is provided with a diverter 21 which guides the slats 11 in outward direction by guiding one of the guide rollers 20 through a trough profile which is similar as the trough profile at the inner rails 6a, 7a. During a first phase of diverting the slats 11 they are upwardly supported by the trough profile of the diverter 21, on the one hand, and by the outer rail 6b on which the slats 11 slide in outward direction, on the other hand. In a next phase of diverting the slats 11 the guide roller 20 at the outer rail 6b is received by an outer guide 22 of the lower bridge 8, whereas the other guide roller 20 is received by an inner guide 23 of the lower bridge 8. Subsequently, the slats 11 follow a path that is dictated by the inner and outer guides 22, 23 of the lower bridge 8. Both the inner and outer guides 22, 23 are trough-shaped. The lower bridge 8 has a bottom plate 24 to which the inner and outer guides 22, 23 are mounted and which has a cut-out 25 for providing space for the outer rail 6b.

It will be clear to the skilled person that the inner guide 23 at one bend of the S-shape of the lower bridge 8 in fact forms the outer guide 22 at the opposite bend, and that the outer guide 22 at the one bend in fact forms the inner guide 23 of the opposite bend.

Figs. 3-5 show that the lower bridge 8 is upwardly supported and guided by the outer helical track 6 through at least a wheel 26 which runs on an upper surface of the inner rail 6a. The lower bridge 8 is also supported in outward radial direction with respect to the centerline of the outer helical track 6 through bridge rollers 27 which run along the inner rail 6a of the outer helical track 6. Figs. 5 and 6 show that the bridge rollers 27 are provided at the diverter 21 and run along the inner rail 6a of the outer helical track 6, on the same surface as the guide rollers 20 of the slats 11 of the conveyor belt 10.

The application of the wheel 26 and bridge rollers 27 is not limited to the lower bridge 8, but can also be applied at the upper bridge 9. The application of the bridge rollers 27 is neither necessarily related to other aspects as described in the present application.

Fig. 3 shows that the lower bridge 8 and the upper bridge 9 are coupled to each other through chains 28 along the inner and outer helical tracks 6, 7. Furthermore, two remote portions of the lower bridge 8 are fixed to a chain 29 which is movable along the inner helical track 7, whereas two remote portions of the upper bridge 9 are fixed to a chain 30 which is also located at and movable along the inner helical track 7. In Fig. 3 the chains 28, 29, 30 are simply pieces of the same material as the conveyor belt 10, which are guided by the guide rollers 20 of the slats 11 along the inner and outer helical tracks 6, 7, but alternative chains and guides are conceivable.

The application of the chains 28-30 is not necessarily related to other aspects as described in the present application.

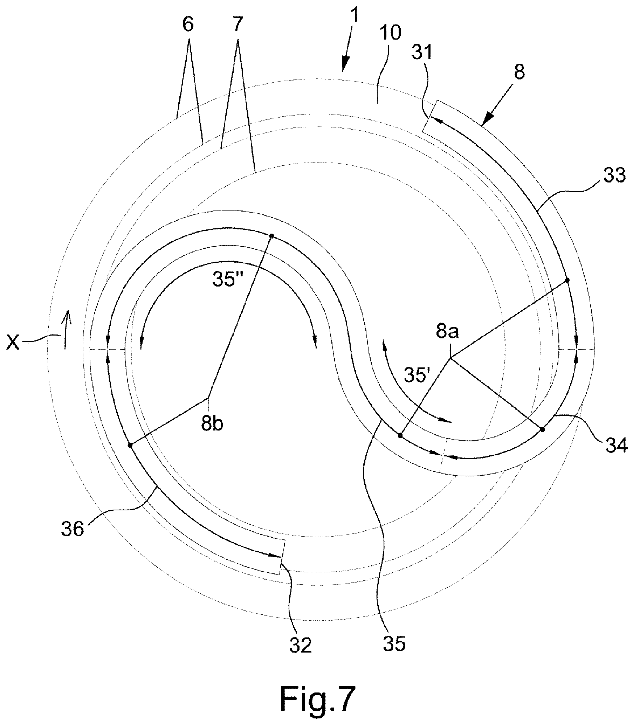

Fig. 7 illustrates a bridge path which the conveyor belt 10 follows from the outer helical track 6 to the inner helical track 7 via the lower bridge 8 as seen from above. The lower bridge 8 has an S-shaped bridge path including a first bend 8a in one direction or clockwise direction and a second bend 8b in opposite direction or anti-clockwise direction as seen from above. The second bend 8b is located downstream of the first bend 8a in this embodiment. From the bridge entrance 31 to the bridge exit 32 the bridge path can be successively subdivided in a lifting portion 33, a cross-over portion 34, a descending portion 35 and a coupling portion 36. Within the lifting portion 33 the conveyor belt 10 is lifted off the outer helical track 6 as described hereinbefore. The bridge path has a longitudinal inclination angle in the direction of conveyance X in the lifting portion 33, which angle is larger than the longitudinal inclination angle of the outer helical track 6 in the direction of conveyance X. On the other hand, the longitudinal inclination angle within the lifting portion 33 is relatively small, for example the angle of the outer helical track 6 is 4.5° and the maximum angle within the lifting portion 33 is 3-8°.

Within the cross-over portion 34 the bridge path extends over neighbouring portions of the inner and outer helical tracks 6, 7. The longitudinal inclination angle within the cross-over portion 34 is still rather small in order to keep the height between the conveyor belt 10 and the neighbouring windings of the inner and outer helical track 6, 7 above the cross-over portion 34 as large as possible. The longitudinal inclination angle may be 1-3°, for example.

Within the descending portion 35 and the coupling portion 36 the bridge path runs in downward direction until reaching the inner helical track 7. The longitudinal inclination angle within the descending portion 35 and the coupling portion 36 is relatively large, for example 3-8°. A transfer between the cross-over portion 34 and the descending portion 35 will be close to the inner rail 7a of the inner helical track 7 in practice.

The first bend 8a of the bridge path has a sharpest portion which is sharper than a sharpest portion of the second bend 8b. The sharpest portion of the second bend 8b of the bridge path is a curved section 35'' being part of the descending portion 35 and having a radius which is the same as the radius of a curved section 35' within the descending portion 35 that is located in the first bend 8a adjacent to the cross-over portion 34. The mentioned radius in the curved section 35' is larger than the radius of the cross-over portion 34. More specifically, the cross-over portion 34 has a combination of a less steeper longitudinal inclination and a smaller radius as seen from above than each of the lifting portion 33, the coupling portion 36 and the curved sections 35', 35" of the descending portion 35.

Between the first and second bends 8a, 8b the descending portion 35 has a straight section, which has a length larger than zero, for example larger than the width of one slat as measured in the direction of conveyance X. The straight portion appears to be advantageous in terms of stable transportation of products between the first and second bends 8a, 8b.

The application of the relatively small inclination and small radius of the cross-over portion is not necessarily related to other aspects as described in the present application.

The inner and outer helical tracks 6, 7 bank to their insides, for example by a banking angle of 1°. The inner and outer guides 22, 23 of the lower bridge 8 also bank to their inside. Within the lifting portion 33 of the lower bridge 8 the banking angle increases, for example from 1° at the bridge entrance 31 up to 5° at the cross-over portion 34. This banking angle is maintained at the cross-over portion 34 and decreases to zero at the straight section halfway the lower bridge 8 and increases again to a higher level from there to a highest level within the second bend 8b. The banking angle decreases within the coupling section 36, for example to 1° at the bridge exit 32. It may be clear that the inner and outer guides of the upper bridge 9 may be arranged such that the bends of the upper bridge 9 bank to their insides, as well.

The trough-shaped inner and outer guides 22, 23 of the upper and lower bridges 8, 9 have profiles that are different from the profiles of the trough-shaped inner rails 6a, 7a. The angle between diverging walls of the trough-shapes of the inner and outer guides 22, 23 of the upper and lower bridges 8, 9 may be 14-20°, for example.

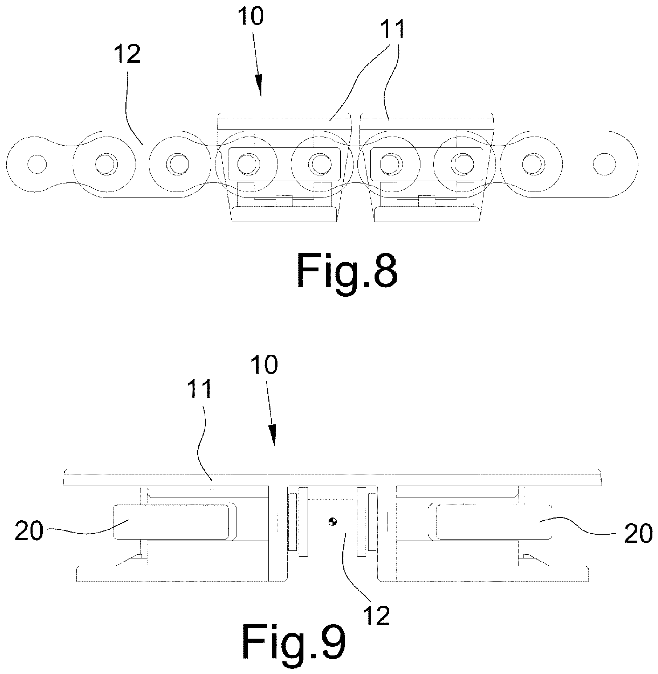

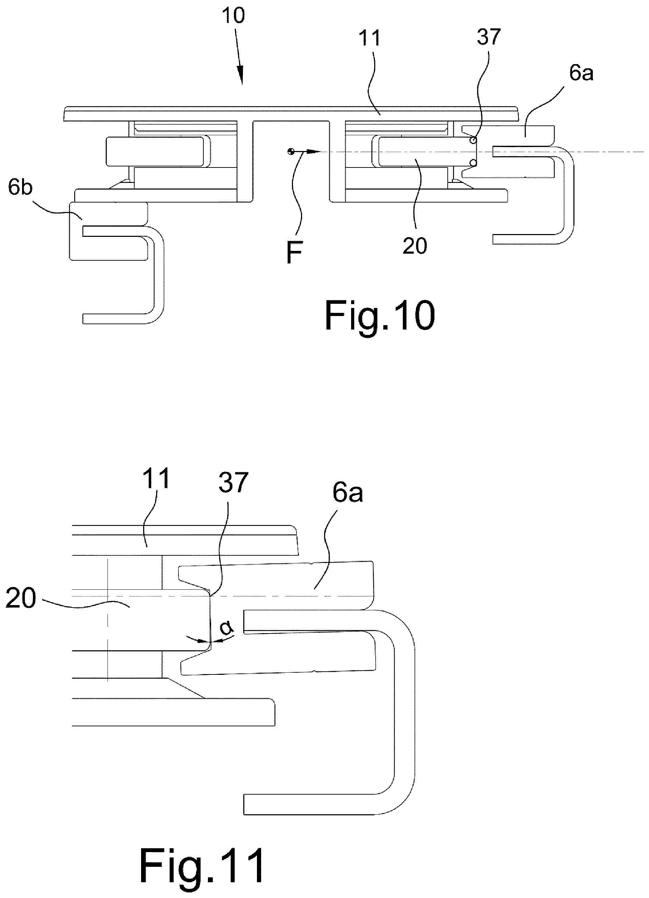

Figs. 8 and 9 show the conveyor belt 10 including two slats 11 in more detail; the other slats 11 are not shown for explanatory reasons. Each slat 11 is mounted to a respective link of the chain 12. Fig. 10 shows the slat 11 in a condition in which one of its guide rollers 20 is upwardly, downwardly and radially supported by the inner rail 6a of the outer helical track 6 and the slat 11 is also upwardly supported by the outer rail 6b of the outer helical track 6. The chain 12 is not shown in Fig. 10 for clarity reasons. Since the slats 11 are only supported upwardly at the outer rail 6b there might be a risk of lifting the slats 11 at that location in case of excessive traction in the conveyor belt 10. This might even lead to tilting of the conveyor belt 10 about the inner rail 6a. This risk is minimized by the shape and dimensions of the conveyor belt 10 and the inner rail 6a, which is illustrated in Fig. 10. Traction in the chain 12 creates a resultant force F in radial direction towards the centerline of the outer helical track 6. In order to avoid tilting, an upper contact location 37 between one of the guide rollers 20 of each slat 11 and the inner rail 6a where the guide roller 20 is radially supported must be located above the line along which the resultant radial force F of the chain 12 acts as seen in cross-section of the outer helical track 6, which is illustrated in Fig. 10. The upper contact location 37 may be an upper end of a line contact between the guide roller 20 and the inner rail 6a.

It is important to adapt the shapes of the guide rollers 20 and the inner rail 6a carefully to each other. For example, a combination of a cylindrical guide roller 20 and an inner rail 6a including a convex radial supporting surface should be avoided, since the convexity may lead to an effective upper contact location 37 which lies close to or at the same height level as the line along which the resultant force F acts as seen in cross-section of the helical track 6.

Fig. 11 shows an embodiment in which the inner rail 6a is slightly tilted such that the upper contact location 37 between the cylindrical guide roller 20 and the inner rail 6a where the guide roller 20 is radially supported lies at a highest possible location. This is indicated by an angle α between opposite surfaces of the guide roller 20 and the inner rail 6a. In this case there is a point contact rather than a line contact between the guide roller 20 and the inner rail 6a.

The situation related to the inner rail 6a as described above also applies to the inner rail 7a of the inner helical track 7.

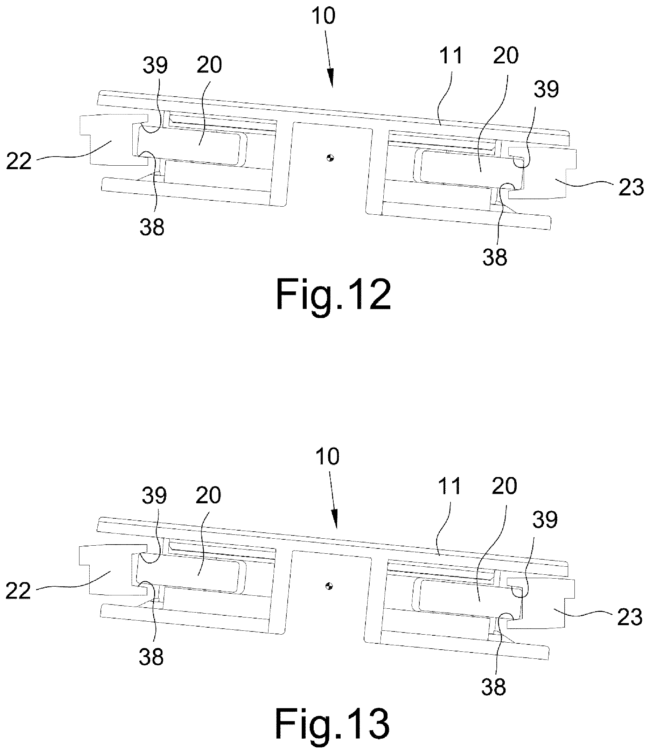

Figs. 12 and 13 show the conveyor belt 10 within the lower bridge 8. It can be seen that both guide rollers 20 of each slat 11 are accommodated in the respective trough-shaped inner and outer guides 22, 23 of the lower bridge 8. This is also the case at the upper bridge 9. The height levels of the inner and outer guides 22, 23 are different in order to create a banking angle. Fig. 12 illustrates one of the slats 11 in a normal situation in which both guide rollers 20 rest on respective lower sidewalls 38 of the inner and outer guides 22, 23. If the guide roller 20 at the outer guide 22 lifts from its lower sidewall 38, for example caused by excessive traction in the conveyor belt 10, it is stopped by an upper sidewall 39 of the outer guide 22.

The angle between the lower sidewall 38 and the upper sidewall 39 of each of the inner and outer guides 22, 23 is relatively small, for example between 10 and 20°, in order to limit the tilting range of the slats 11 within the inner and outer guides 22, 23. This is illustrated in Fig. 13. Furthermore, if the conveyor belt 10 is in a condition without traction it may move in outward direction within a bend such that the guide rollers 20 shift in transverse direction of the conveyor belt 10 on the lower sidewalls 38 of the inner and outer guides 23. In case of Fig. 12 this would be a displacement to the left, which leads to a larger banking angle. Due to the relatively small angles between the respective lower and upper sidewalls 38, 39 the maximum variation of the banking angle is limited.

The relatively small angles between the respective lower and upper sidewalls 38, 39 is not necessarily related to other features of the accumulating conveyor as shown in the figures and described herein.

It is noted that the inner rails 6a, 7a may also have a trough shape for upwardly, downwardly and radially supporting the guide rollers 20 of the conveyor belt 10, but the angle between the diverging walls of the trough shapes may be larger than in case of the inner and outer guides 22, 23 of the bridges 8, 9, for example 40°. The diverging angles of the inner rails 6a, 7a are less critical than in case of the bridges 8, 9 in terms of banking variation since the radii of the inner rails 6a, 7a are relatively large such that the effect of a banking variation on the maximum allowable speed of conveyor belt 10 is limited compared to the bridges 8, 9.

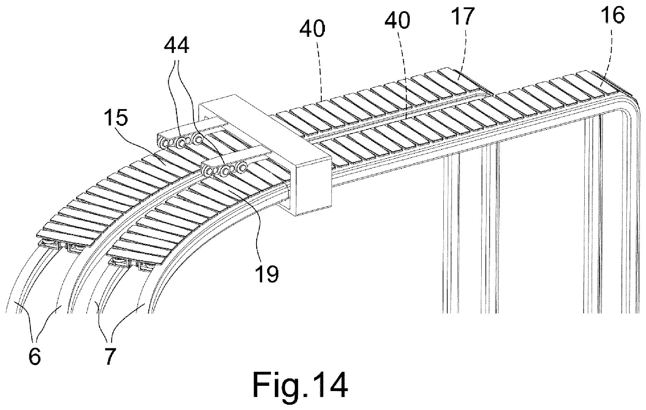

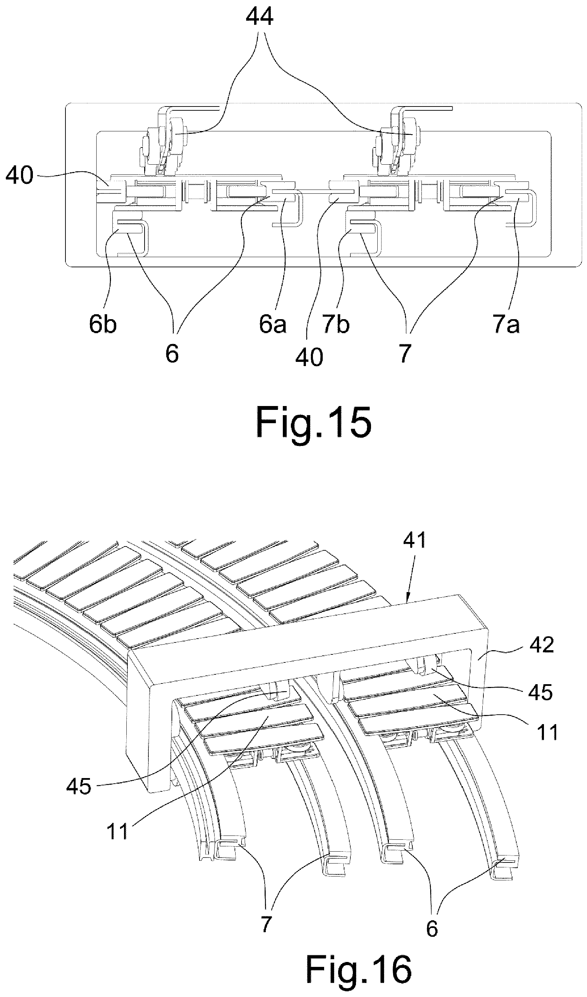

Figs. 14 and 15 show an upper side of the accumulating conveyor 1 in more detail. At the upper ends 15, 19 of the inner and outer helical tracks 6, 7 the accumulating conveyor 1 is provided with two outer rail guides 40 to guide the slats 11 at respective transfers between the outer rails 6b, 7b and the sprockets 16, 17 at the upper side of the accumulating conveyor 1 in order to avoid displacement of the conveyor belt 10 in outward direction of the inner and outer helical tracks 6, 7. Before the conveyor belt 10 approaches one of the outer rail guides 40 it must rest on the corresponding outer rail 6b, 7b in order to avoid that a portion of one of the slats 11 collides against the corresponding rail guide 40. This is guaranteed by the presence of two series of converging rollers 44 above the conveyor belt 10, see Fig. 14. In fact, only one series of converging rollers 44 is necessary for addressing the mentioned risk, depending on the direction of conveyance of the conveyor belt 10, but both series may be applied in case the conveyor belt 10 is also driven in opposite direction.

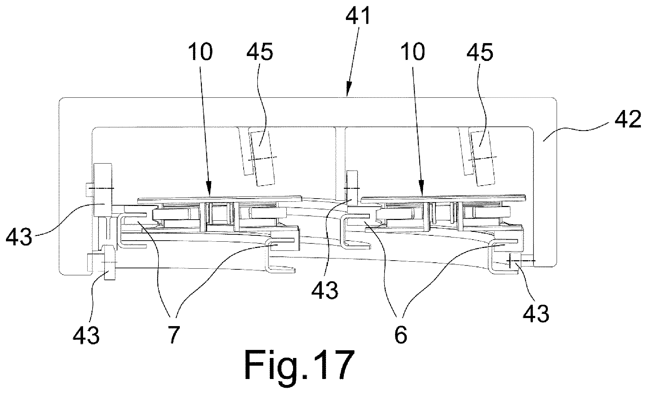

Figs. 16 and 17 show a protection carriage 41 which is suitable for preventing the conveyor belt 10 from a complete derailment in the event that the conveyor belt 10 unexpectedly derails at an upper side of the accumulating conveyor 1, for example caused by excessive traction in the conveyor belt 10. In particular in case of a small accumulation region the distance of the conveyor belt 10 along the outer helical track 6 between the upper bridge 9 and the upper end 15 of the outer helical track 6 is relatively long, which results in a relatively high traction in the conveyor belt 10 in the upper portion of the outer helical track 6 adjacent to the sprocket 17, hence causing a risk of derailment due to tilting of the conveyor belt 10 about the inner rail 6a of the outer helical track 6.

The protection carriage 41 has a U-shaped frame 42 which freely runs along the inner and outer helical tracks 6, 7 through carriage rollers 43. Under normal operating conditions when the lower and upper bridges 8, 9 are at a relatively low position, the protection carriage 41 is located at a distance of a half winding, for example, from the upper ends 15, 19 of the inner and outer helical tracks 6, 7 where it abuts a stop element (not shown) to prevent the protection carriage 41 from running further downwardly. Such a location is illustrated in Fig. 1. However, the distance may be different. When a large accumulation region is required the upper bridge 9 will push the protection carriage 41 upwardly along the inner and outer helical tracks 6, 7 beyond the stop element until it is stopped at the upper ends 15, 19 of the first and second helical tracks 6, 7.

The functioning of the protection carriage 41 is as follows: when the upper and lower bridges 8, 9 are at a relatively low height position and the conveyor belt 10 unexpectedly derails at a location above the upper bridge 9, for example at the upper end 15 of the outer helical track 6, this will be detected by sensors (not shown) and the motors 13, 14 will be switched-off immediately. In order to avoid that derailment will progress downwardly along the inner and outer helical tracks 6, 7 like a chain reaction the protection carriage 41 limits the length of derailment by the wheels 45 inside the frame 42 of the protection carriage 41. The wheels 45 prevent the cooperating slat 11 from tilting about the inner rails 6a, 7a. If the protection carriage 41 is located a half winding from the upper ends 15, 19 of the inner and outer helical tracks 6, 7, for example, the derailment is limited to that distance.

The protection carriage is not necessarily related to other features of the accumulating conveyor as shown in the figures and described herein.

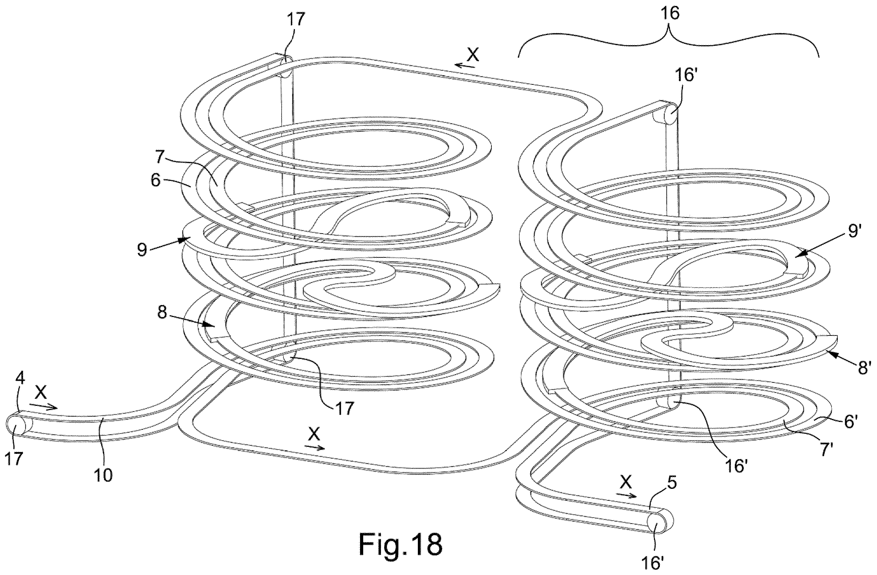

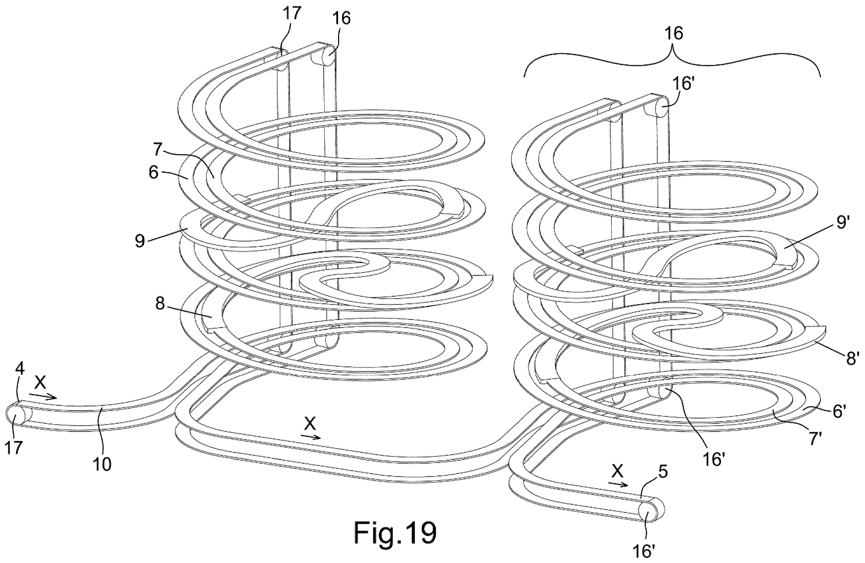

Fig. 18 shows an embodiment in which two accumulating conveyors 1 are arranged in series. Compared to the embodiment as shown in Fig. 1 the left part of the embodiment of Fig. 18 can be considered as comprising the first and second helical tracks 6, 7, the first and second bridges 8, 9 and the second set of auxiliary guides 17, whereas the right part can be considered as comprising the first set of auxiliary guides 16. In this case the first set of auxiliary guides 16 comprise additional first and second helical tracks 6', 7' and additional first and second bridges 8', 9' which function in a similar way as the left part of the embodiment as shown in Fig. 18. The accumulation region extends from the product inlet 4 via the first bridge 8 of the left part, the additional first bridge 8' of the right part to the product outlet 5. Due to this arrangement the speed of the conveyor belt 10 between the first bridge 8 of the left part and the additional first bridge 8' of the right part is half of the speed of the conveyor belt 10 at the product outlet 5 when the speed of the conveyor belt 10 at the product inlet 4 is zero. The same effect occurs if the speed at the product outlet 5 is zero whereas the speed at the product inlet is not zero. Due to the speed reduction less driving power is required. Fig. 19 shows an alternative embodiment, which is less preferred because of introducing a larger total length of the conveyor belt 10 in comparison to the embodiment as shown in Fig. 18.

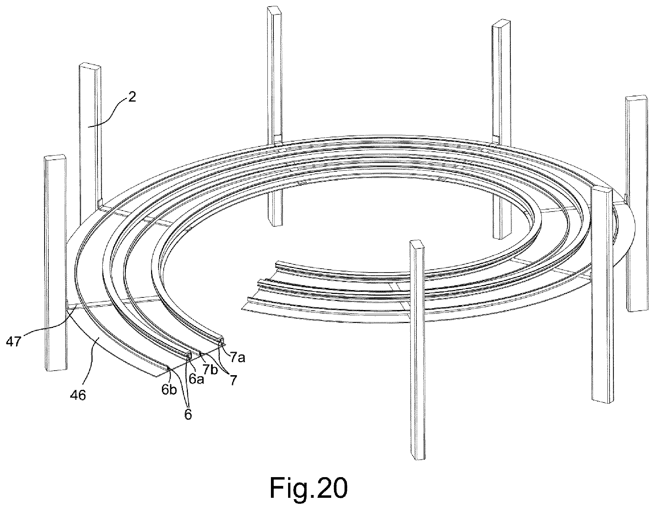

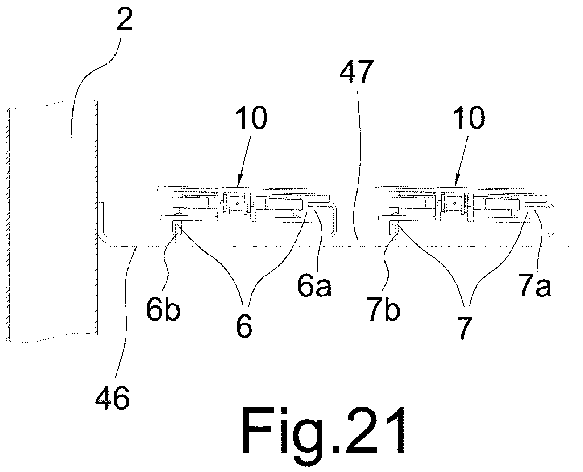

Figs. 20 and 21 show another aspect of the present invention. In this case the inner and outer rails 6a, 6b, 7a, 7b are supported by a helical plate 46. This appears to create a rigid support, even in case of a relatively thin helical plate. Hence, the first and second helical tracks 6, 7 can be supported by the relatively thin helical plate 46 instead of conventional relatively thick rods, which extend radially with respect to the centerlines of the inner and outer helical tracks 6, 7 and which are arranged at angular distance with respect to each other about the centerline of the inner and outer helical tracks 6, 7. The sum of the height of the helical plate 46 and each of the inner and outer rails 6a, 6b, 7a, 7b can be minimized. The helical plate 46 may be made by deformation of a ring-shaped plate including a gap in radial direction of the ring-shaped plate, wherein end portions of the ring-shaped plate at either side of the gap are displaced with respect to each other in a direction perpendicular to the plane of the ring-shaped plate and attached to the frame 2. Due to the mentioned displacement the ring-shaped plate automatically deforms into the helical shape. Figs. 20 and 21 show that the helical plate 46 is fixed to the frame 2 by means of flat rods 47. A number of such helical plates 46 can be mounted behind each other to form a plurality of windings.

The application of the helical plate is not necessarily related to other aspects as described in the present application.

In practice the helical conveyor may be provided with a plurality of such helical plates which may be fixed to each other and to the frame.

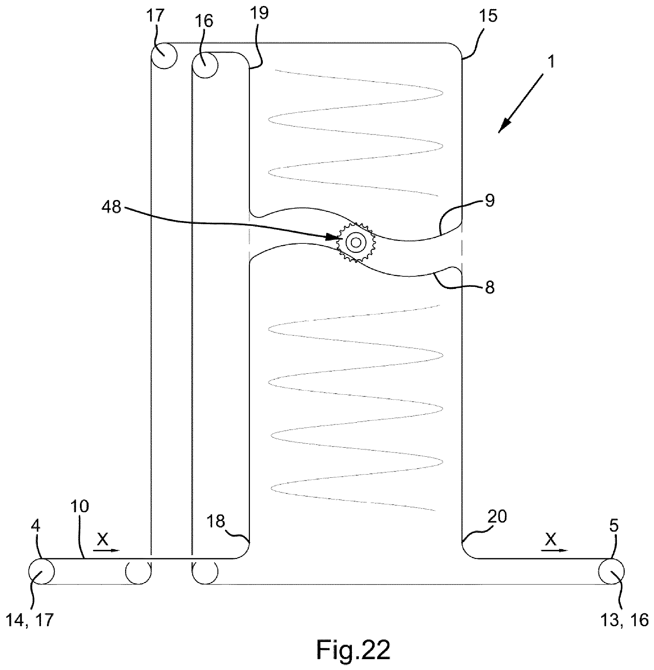

Fig. 22 shows an illustrative drawing of an alternative embodiment of the accumulating conveyor 1. This embodiment is provided with a coupling 48 between respective portions of the conveyor belt 10 at the lower bridge 8 and the upper bridge 9. The coupling 48 transfers a driving force between the respective portions of the conveyor belt 10 at the respective lower and upper bridges 8, 9. In this case the coupling 48 is formed by a sprocket which engages the chain 12 of the conveyor belt 10 at the lower and upper bridges 8, 9, but alternative configurations are conceivable.

The functioning of the coupling 48 can be explained by the following example. When the lower and upper bridges 8, 9 are at a relative high level in the accumulating conveyor 1 and the electric motor 14 at the product inlet 4 pulls the conveyor belt 10, the level of traction in the conveyor belt 10 directly downstream of the product inlet 4 will be low, but will increase significantly during its travel towards the lower bridge 8 because of the pulling force of the electric motor 13 at the product outlet 5 and the relatively high number of windings along which the conveyor belt 10 travels up to the lower bridge 8. Since the conveyor belt 10 follows a helical path the required traction increases exponentially with the number of windings. On the other hand, the electric motor 14 at the product inlet 4 can exert a relatively high pulling force on the conveyor belt 10 at the upper bridge 9 because of the relatively low number of windings between the upper bridge 9 and the electric motor 14 at the product inlet 4 in this condition. Due to the presence of the coupling 48 the portion of the conveyor belt 10 at the upper bridge 9 can drive the portion of the conveyor belt 10 at the lower bridge 8 in this situation. In another situation, when the bridges 8, 9 are located at a relatively low position in the accumulating conveyor 1, the portion of the conveyor belt 10 at the lower bridge 8 may drive the portion of the conveyor belt 10 at the upper bridge 9 through the coupling 48. As a consequence, the presence of the coupling 48 can smoothen traction peaks in the conveyor belt 10.

The application of the coupling is not necessarily related to other aspects as described in the present application.

The invention is not limited to the embodiments shown in the drawings and described hereinbefore, which may be varied in different manners within the scope of the claims. For example, the direction of conveyance of the conveyor belt may be in opposite direction, whereas the product inlet and product outlet are reversed. It is also possible that the product inlet and product outlet are located at different locations than shown in the figures.

Furthermore, the accumulation region and the unoccupied region may be reversed, such that the product inlet and product outlet can be located at the upper ends of the respective inner and outer helical tracks. In this case the upper bridge forms part of the accumulation region whereas the lower bridge forms part of the unoccupied region.

## Claims

1. A conveyor (1) including a helical track (6, 7) and a conveyor belt (10) which is drivable along the helical track, wherein the helical track (6, 7) is provided with a helical inner rail (6a, 7a) and a helical outer rail (6b, 7b) surrounding the inner rail (6a, 7a), wherein the conveyor belt (10) is provided with slats (11) that are mounted to a flexible conveyor line (12), such as a side-bow chain, wherein each of the slats (11) is provided with a guide roller (20) having an axis of rotation including a vertical component, which guide roller (20) is upwardly, downwardly and radially supported by the inner rail (6a, 7a) and wherein each of the slats (11) is upwardly supported by the outer rail (6b, 7b) **characterized in that** each of the slats (11) is movable in upward direction with respect to the outer rail (6b, 7b),
wherein an upper contact location (37) between the guide roller (20) and the inner rail (6a, 7a) where the guide roller (20) is radially supported lies above a line along which a resultant radial force of the conveyor line (12) towards a centerline of the inner rail (6a, 7a) acts.

2. A conveyor (1) according to claim 1, wherein the line along which the resultant radial force of the conveyor line (12) towards the centerline of the inner rail (6a, 7a) acts intersects a centerline of the conveyor line (12), such that the upper contact location (37) between the guide roller (20) and the inner rail (6a, 7a) where the guide roller (20) is radially supported lies above the centerline of the conveyor line (12) as seen in a cross-sectional plane of the helical track in which the centerline of the inner rail (6a, 7a) lies.

3. A conveyor (1) according to claim 1 or 2, wherein the guide roller (20) is cylindrical and the inner rail (6a, 7a) has a trough-shape including a bottom between a lower sidewall and an upper sidewall, which bottom supports the guide roller (20) in radial direction from the centerline of the inner rail (6a, 7a).

4. A conveyor (1) according to claim 3, wherein the guide roller (20) of each slat (11) and the inner rail (6a, 7a) are arranged such that the upper contact location (37) is a point contact at the bottom adjacent to the upper sidewall.

## Patentansprüche

1. Förderer (1) mit einer wendelförmigen Bahn (6, 7) und einem Förderband (10), das entlang der wendelförmigen Bahn antreibbar ist, wobei die wendelförmige Bahn (6, 7) mit einer wendelförmigen inneren Schiene (6a, 7a) und einer wendelförmigen äußeren Schiene (6b, 7b), die die innere Schiene (6a, 7a) umgibt, versehen ist, wobei das Förderband (10) mit Lamellen (11) versehen ist, die an einem flexiblen Förderstrang (12), wie z.B. einer Seitenbogenkette, montiert sind, wobei jede der Lamellen (11) mit einer Führungsrolle (20) versehen ist, die eine Drehachse mit einer vertikalen Komponente hat, wobei die Führungsrolle (20) nach oben, nach unten und radial von der inneren Schiene (6a, 7a) gestützt wird, und wobei jede der Lamellen (11) nach oben von der äußeren Schiene (6b, 7b) gestützt wird, **dadurch gekennzeichnet, dass** jede der Lamellen (11) in Bezug auf die äußere Schiene (6b, 7b) in Aufwärtsrichtung bewegbar ist, wobei eine obere Kontaktstelle (37) zwischen der Führungsrolle (20) und der inneren Schiene (6a, 7a), wo die Führungsrolle (20) radial gestützt wird, über einer Linie liegt, entlang der eine resultierende Radialkraft des Förderstrangs (12) in Richtung zu einer Mittellinie der inneren Schiene (6a, 7a) wirkt.

2. Förderer (1) gemäß Anspruch 1, wobei die Linie, entlang der die resultierende Radialkraft des Förderstrangs (12) in Richtung zu der Mittellinie der inneren Schiene (6a, 7a) wirkt, eine Mittellinie des Förderstrangs (12) schneidet, so dass die obere Kontaktstelle (37) zwischen der Führungsrolle (20) und der inneren Schiene (6a, 7a), wo die Führungsrolle (20) radial gestützt wird, gesehen in einer Querschnittsebene der wendelförmigen Bahn, in der die Mittellinie der inneren Schiene (6a, 7a) liegt, über der Mittellinie des Förderstrangs (12) liegt.

3. Förderer (1) gemäß Anspruch 1 oder 2, wobei die Führungsrolle (20) zylindrisch ist und die innere Schiene (6a, 7a) eine Rinnenform mit einem Boden zwischen einer unteren Seitenwand und einer oberen Seitenwand hat, wobei der Boden die Führungsrolle (20) in Radialrichtung von der Mittellinie der inneren Schiene (6a, 7a) stützt.

4. Förderer (1) gemäß Anspruch 3, wobei die Führungsrolle (20) jeder Lamelle (11) und die innere Schiene (6a, 7a) so angeordnet sind, dass die obere Kontaktstelle (37) ein Punktkontakt an dem Boden benachbart zu der oberen Seitenwand ist.

## Revendications

1. Convoyeur (1) comportant une piste hélicoïdale (6, 7) et une bande transporteuse (10) qui peut être entraînée le long de la piste hélicoïdale, dans lequel la piste hélicoïdale (6, 7) est pourvue d'un rail intérieur hélicoïdal (6a, 7a) et d'un rail extérieur hélicoïdal (6b, 7b) entourant le rail intérieur (6a, 7a), dans lequel la bande transporteuse (10) est pourvue de lattes (11) qui sont montées sur une ligne de convoyeur flexible (12), telle qu'une chaîne à trajectoire courbe, dans lequel chacune des lattes (11) est pourvue d'un galet de guidage (20) ayant un axe de rotation comportant une composante verticale, lequel galet de guidage (20) est soutenu vers le haut, vers le bas et radialement par le rail intérieur (6a, 7a) et dans lequel chacune des lattes (11) est soutenue vers le haut par le rail extérieur (6b, 7b), **caractérisé en ce que** chacune des lattes (11) est mobile vers le haut par rapport au rail extérieur (6b, 7b), dans lequel un emplacement de contact supérieur (37) entre le galet de guidage (20) et le rail intérieur (6a, 7a) où le galet de guidage (20) est supporté radialement se trouve au-dessus d'une ligne le long de laquelle une force radiale résultante de la ligne de convoyeur (12) vers un axe central du rail intérieur (6a, 7a) agit.

2. Convoyeur (1) selon la revendication 1, dans lequel la ligne le long de laquelle la force radiale résultante de la ligne de convoyeur (12) vers l'axe central du rail intérieur (6a, 7a) agit croise un axe central de la ligne de convoyeur (12), de sorte que l'emplacement de contact supérieur (37) entre le galet de guidage (20) et le rail intérieur (6a, 7a) où le galet de guidage (20) est supporté radialement se trouve au-dessus de l'axe central de la ligne de convoyeur (12) comme vu dans un plan en coupe transversale de la piste hélicoïdale où se trouve l'axe central du rail intérieur (6a, 7a).

3. Convoyeur (1) selon la revendication 1 ou 2, dans lequel le galet de guidage (20) est cylindrique et le rail intérieur (6a, 7a) présente une forme d'auge comportant un fond entre une paroi latérale inférieure et une paroi latérale supérieure, lequel fond supporte le galet de guidage (20) dans la direction radiale à partir de l'axe central du rail intérieur (6a, 7a).

4. Convoyeur (1) selon la revendication 3, dans lequel le galet de guidage (20) de chaque latte (11) et le rail intérieur (6a, 7a) sont agencés de sorte que l'emplacement de contact supérieur (37) soit un contact ponctuel au niveau du fond adjacent à la paroi latérale supérieure.
